(19) Europäisches Patentamt

European Patent Office

Office européen des brevets

(11) **EP 0 718 244 B1**

(12) **EUROPEAN PATENT SPECIFICATION**

(45) Date of publication and mention
of the grant of the patent:
**05.06.2002 Bulletin 2002/23**

(51) Int Cl.[7]: **C03B 37/014**, C03B 37/018

(21) Application number: **95119160.0**

(22) Date of filing: **06.12.1995**

(54) **Method of making optical fiber having depressed index core region**

Verfahren zur Herstellung von optischen Fasern mit Brechungsindexabsenkung im Kernbereich der Faser

Procédé de préparation de fibres optiques avec réduction de l'indice de réfraction dans le coeur de fibre

(84) Designated Contracting States:
**DE FR GB IT NL**

(30) Priority: **20.12.1994 US 359392**

(43) Date of publication of application:
**26.06.1996 Bulletin 1996/26**

(73) Proprietor: **CORNING INCORPORATED
Corning, N.Y. 14831 (US)**

(72) Inventor: **Berkey, George Edward
Corning, NY 14831 (US)**

(74) Representative: **Boon, Graham Anthony et al
Elkington and Fife,
Prospect House,
8 Pembroke Road
Sevenoaks, Kent TN13 1XR (GB)**

(56) References cited:
EP-A- 0 147 225    EP-A- 0 176 263
EP-A- 0 182 250    EP-A- 0 300 610
EP-A- 0 359 351    EP-A- 0 484 659
EP-A- 0 501 429    EP-A- 0 522 229
US-A- 4 486 212    US-A- 5 180 410

• PATENT ABSTRACTS OF JAPAN vol. 013, no. 417 (C-636), 14 September 1989 & JP 01 153551 A (SUMITOMO ELECTRIC IND LTD), 15 June 1989,
• PATENT ABSTRACTS OF JAPAN vol. 012, no. 092 (C-483), 25 March 1988 & JP 62 226829 A (FURUKAWA ELEC CO LTD), 5 October 1987,

**Description**

Background of the Invention

This invention relates to a method of making a low loss optical fiber the core of which includes an annular region of depressed refractive index relative to silica.

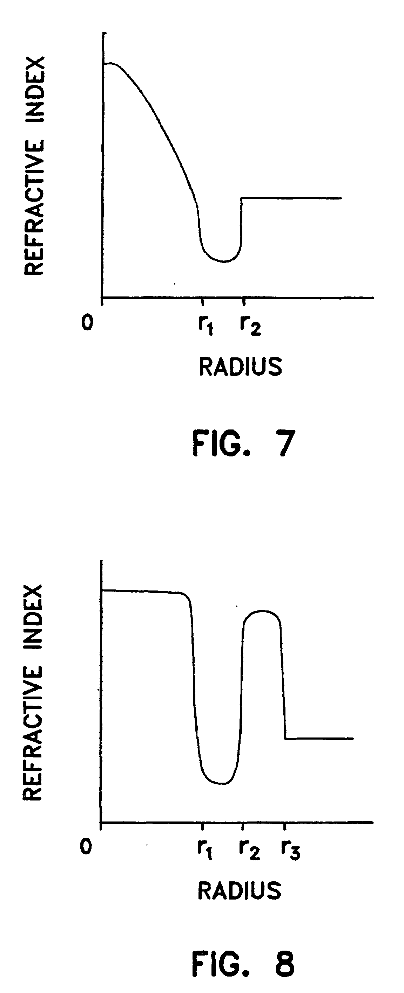

Optical fibers having refractive index profiles such as W-profiles, segmented core profiles, and the like possess desirable dispersion characteristics. See U.S. patents 4,715,679 and 5,031,131 for teachings of various kinds of dispersion modified optical fibers. Fibers having these kinds of refractive index profiles have often been made by chemical vapor deposition (CVD) processes such as plasma CVD processes that are capable of forming single-mode fibers the cores of which include layers of different refractive indices (see Figs. 7 and 8, for example). Such processes produce relatively small preforms. It is advantageous to form dispersion modified optical fiber preforms by outside vapor deposition (OVD) processes which produce relatively large preforms or draw blanks in order to decrease the cost of making the fiber.

A typical OVD process for forming such fibers is disclosed in U.S. patent 4,629,485. In accordance with that patent, a germania-doped silica rod is formed and stretched to decrease its diameter. A piece of the rod is used as a mandrel upon which pure silica glass particles or soot is deposited. The resultant composite structure is heated in a consolidation furnace through which a fluorine-containing gas flows. The soot is therefore doped with fluorine and consolidates on the rod. One or more additional layers of glass are formed on the outer surface of the fluorine-doped silica layer to form a blank from which a fiber can be drawn.

When soot is consolidated in accordance with the aforementioned method, whereby fluorine is supplied to the porous preform solely by way of the fluorine-containing muffle gas, the fluorine concentration (as measured by the $\Delta$ of the fluorine-containing layer) is not sufficient to provide certain desirable optical characteristics. The typical fluorine concentration acheived with muffle gas doping provides a -0.4%$\Delta$ when $SiF_4$ is the fluorine-containing constituent. The maximum delta value for $SiF_4$ produced by the above-described process is -0.5%$\Delta$.

One aspect of the invention concerns a method of making an optical fiber preform an annular region of which consists of silica doped with a sufficient amount of fluorine that the delta value of the annular region with respect to silica is more negative than -0.5%$\Delta$.

As used herein, the term $\Delta_{a-b}$, the relative refractive index difference between two materials with refractive indices $n_a$ and $n_b$, is defined as

$$\Delta_{a-b} = (n_a{}^2 - n_b{}^2) / (2n_a{}^2) \qquad (1)$$

For simplicity of expression, $\Delta$ is often expressed in percent, i.e. one hundred times $\Delta$. In this discussion, $n_a$ is the refractive index of the fluorine-doped glass and $n_b$ is the refractive index of silica.

Another aspect of the invention concerns the collapse of a tube of fluorine-doped and/or boron-doped glass onto a rod of core glass such that during the resultant fusion of the interface between those two members, substantially no seeds are formed.

When a fluorine-doped silica tube is collapsed onto a germania-doped silica rod, the resultant interface between those two members contains many seeds, and much of the resultant preform or blank produces unusable optical fiber. Such seed formation is less prevalent when members formed of other glass compositions such as a germania-doped silica tube and a pure silica tube are fused to form a preform.

U.S. Patent 4,668,263 discloses a method for collapsing a silica tube having a fluorine-doped inner layer onto the surface of a silica rod. In accordance with that patent the collapse step is accompanied by rotating the tube and heating it with the flame from a longitudinally travelling burner. That technique could not be employed to make dispersion modified fiber designs of the type that utilize the entire fluorine-doped tube, including the outer surface, as part of the core region or light propagating region of the fiber. The reason for this is that, since the flame would wet the glass, i.e. introduce hydroxyl contamination, the resultant fiber would be rendered unsuitable for operation at wavelengths where attenuation due to hydroxyl ions is large.

EP-A-501 429, on which the preamble of claim 1 herein is based provides a method of making an optical fiber preform comprising the steps of

inserting a glass core rod into a glass tube to form an assembly, said tube having first and second ends,

heating the entire assembly,

flowing a chlorine-containing gas into the first end of said tube and between said tube and said rod, and out of the second end onto said rod, and

collapsing said tube onto said rod.

Summary of the Invention

The present invention provides a method of the type disclosed in EP-A-0 501 429 characterized in that the glass tube is doped with an index of refraction decreasing doping agent, and in that the resultant assembly is provided with a layer of cladding glass.

The index of refraction doping agent used to dope the glass tube may be fluorine or boron, both of which can be added to silica to lower its refractive index. Fluorine is the preferred dopant since attenuation due to $B_2O_3$ limits fiber usage to wavelengths less than about 1200 nm.

To provide a tube doped with fluorine, a fluorine-containing gas is flowed into the aperture and outwardly through the pores of a porous, cylindrically-shaped glass preform. The porous glass preform is heated to consolidate it into a non-porous fluorine-doped tube.

A boron-doped glass tube can be formed by depositing boron-containing glass particles on a cylindrical mandrel, removing the mandrel to form a tubular, boron-containing porous glass preform, and heating the porous glass preform to consolidate it into a non-porous-boron-doped tube.

According to the invention it is thus possible to make an optical fiber preform having an annular region containing a high content of fluorine. A tubular porous glass preform is initially formed. The preform is heated, and a gas is flowed into the longitudinal aperture of the preform and outwardly through its pores. The gas consists entirely of a fluorine-containing compound, whereby a high concentration of fluorine becomes incorporated in the pores of the preform. The porous preform is heated to consolidate it into a non-porous fluorine-containing glass tube. A cylindrically-shaped core rod is inserted into the fluorine-doped tube. The tube is then shrunk onto the core rod, and the interface between the core preform and the tube is fused.

Brief Description of the Drawings

Fig. 1 illustrates the formation of a porous glass preform on a mandrel.

Fig. 2 illustrates the consolidation of a porous glass preform.

Fig. 3 illustrates the application of a coating of glass particles to a fluorine-doped glass tube.

Fig. 4 as a cross-sectional view of an apparatus for consolidating and fusing the assembly formed by the method of Fig. 3.

Fig. 5 is a cross-sectional view taken along lines 5-5 of Fig. 4.

Fig. 6 is a cross-sectional view of the fused assembly resulting from the consolidation/fusion step illustrated in Fig. 4.

Figs. 7 and 8 are exemplary of the refractive index profiles of optical fibers that can be produced by the method of this invention.

Fig. 9 is a cross-sectional view of a draw furnace in which a tube is stretched and collapsed onto a rod.

Description of the Preferred Embodiment

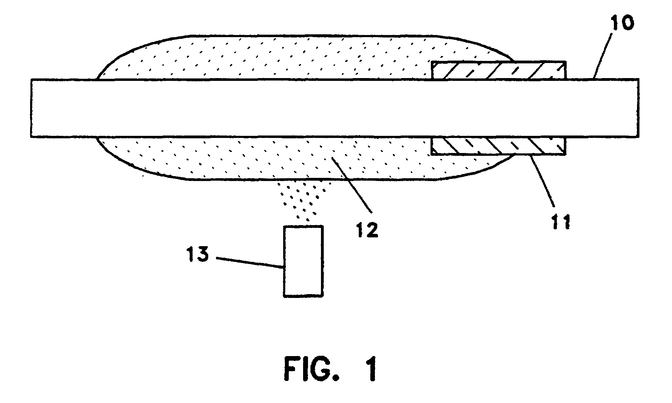

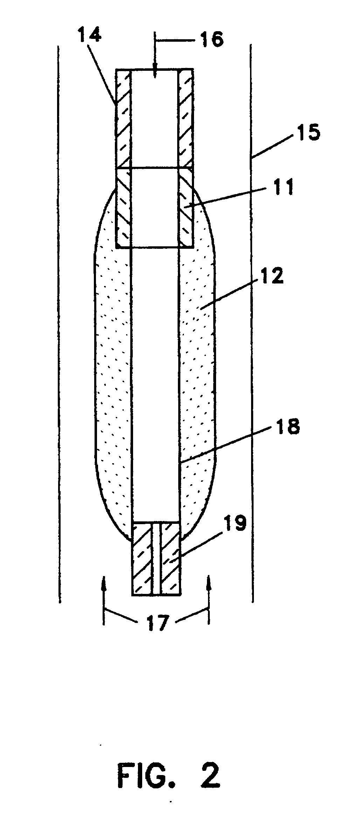

The method of this invention produces an optical fiber preform having at least one annular region containing a refractive index decreasing dopant. Basically, this method comprises (a) making a glass tube containing a refractive index decreasing dopant throughout its entire radius, (b) inserting a core glass rod into the tube, (c) cleaning the adjacent surfaces of the rod and tube by flowing chlorine between them at an elevated temperature, (d) collapsing the tube onto the rod, and (e) adding to the resultant structure a sufficient amount of cladding that an optical fiber can be drawn therefrom. In one embodiment, the tube is overclad with a soot coating, and steps (c) and (d) are performed in the same furnace, the overclad preform initially being subjected to an elevated temperature sufficient to achieve the chlorine cleaning, the temperature then being increased to consolidate the soot and collapse and fuse the tube to the rod. Fiber attenuation is low as a result of the low seed count at the interface between the inner core and the depressed index region resulting from step (c). The core of the resultant fiber includes the inner core region and the depressed index region and optionally includes other adjacent annular regions. In one embodiment of the invention, the annular preform region of depressed refractive index is doped with fluorine. Figs. 1 and 2 illustrate a method of making a fluorine-doped glass tube. Mandrel 10 is inserted through tubular handle 11. Mandrel 10 has a relatively large diameter in order to produce a tube having a sufficiently large inner diameter to be useful in later steps of the method. While mandrel 10 rotates, it also undergoes translational motion with respect to soot generating burner 13, whereby a porous glass preform 12 is built up on the mandrel.

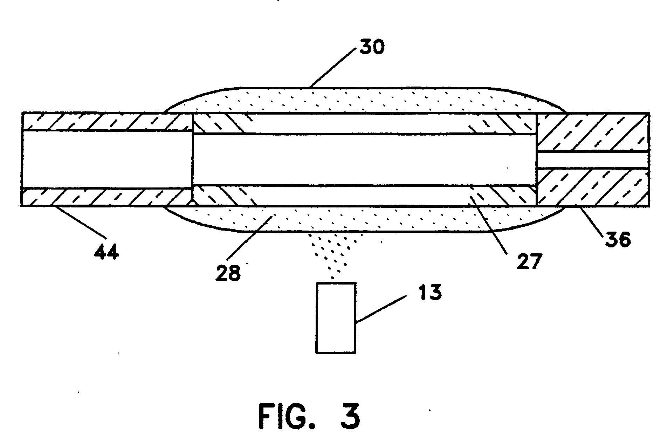

A standard ball joint handle 14 (see handle 44 of Fig. 3 for greater detail) is fused to handle 11, and preform 12 is suspended in consolidation furnace 15 by that handle. Consolidation is performed in an atmosphere that includes a fluorine-containing centerline gas such as $SiF_4$, $CF_4$, $C_2F_6$, or the like. $SiF_4$ tends to give higher levels of fluorine doping (typically producing a -0.7%Δ and occasionally producing a delta of about -0.8%), but that dopant causes elevated water levels in the resultant glass. Such elevated water levels in the fluorine-containing glass can be tolerated if the fiber core has a relatively high Δ-value with respect to the silica cladding, whereby little power propagates in the annular fluorine-containing region of the fiber. $CF_4$ results in dryer glass but does not give the high dopant levels that can be obtained by using SiF4. High concentrations of fluorine can be used in this process because porous soot preform 12 is formed of pure silica, i.e. there is no dopant such as germania that could be disadvantageously diffused within the blank. The resultant consolidated tube contains a relatively high fluorine concentration since fluorine-containing gas is flowed into the tube aperture 18 (arrow 16) and outwardly through the pores of the porous glass preform whereby it achieves maximum contact with the entire body of porous glass, and since the centerline gas can consist of a pure gaseous fluorine compound that contains no diluent such as helium, chlorine or the like. Also, the only dopant introduced into the porous preform by the centerline flow is fluorine. The end of the porous preform that consolidates first preferably contains a capillary tube 19 to prevent the muffle gases from entering the preform aperture and to cause most of the centerline gas to flow outwardly through the preform interstices. A fluorine-containing gas also flows through furnace muffle 15, as indicated by arrows 17. Whereas the muffle gas 17 preferably contains a diluent gas such as helium and a sufficient amount of chlorine to dry the preform, the centerflow gas 16 preferably consists solely of the gaseous fluorine compound. However, the centerflow gas 16 could also contain one or more diluent gases such as helium and chlorine. The flow of chlorine can be discontinued after the desired water content has been achieved and before the porous preform consolidates. The resultant fluorine-doped tube can be stretched or redrawn to decrease the inside diameter to the desired size. If the tube is stretched, it can then be cut to lengths suitable for the deposition of soot thereon.

A boron-doped tube 27 is simpler to make than a fluorine-doped tube. For example, a porous $SiO_2$-$B_2O_3$ preform could be formed on a mandrel as described in conjunction with Fig. 1, $BCl_3$ being fed to the burner along with $SiCl_4$. The mandrel is removed, leaving a longitudinal aperture, and the preform is placed into a consolidation furnace. A muffle gas of 40 standard liters per minute (slpm) helium flows upwardly through the furnace muffle, and centerline gases of 1 slpm helium and 75 standard cubic centimeters per minute (sccm) chlorine flows into the aperture. After the preform is dried, it is consolidated. The resultant tube can be stretched as described above.

As shown in Fig. 3, a standard ground joint handle 44 (see Fig. 3 for greater detail) is fused to one end of a length 27 of the fluorine-doped or boron-doped tube 27. A short length of silica tube 36 is preferably fused to the opposite end of tube 27. Tube 27 is then mounted in a lathe where it is rotated and translated with respect to soot generating burner 13. Particles of glass soot are deposited on tube 27 to build up coating 28. Silica tubing 36 is employed for the purpose of reducing fluorine tubing waste that would have been caused by the inability to deposit soot coating 28 on the end of tube 27 if it had been secured by the lathe chuck.

Coating 28 extends over that portion of handle 44 adjacent tube 27 for the following reason. During the subsequent consolidation process, when that portion of tube 27 adjacent handle 44 is subjected to consolidation temperature, its viscosity becomes sufficiently low that, if that portion of tube 27 were uncoated, it could not support the weight of the soot coated tube, i.e. the structure would drop into the consolidation furnace. However, since the soot extends over the adjacent part of handle 44, the entire end of tube 27 adjacent handle 44 is covered. Therefore, the silica soot forms a sufficiently strong layer over tube 27 to support the structure during the consolidation process.

Whereas a single coating 28 is shown, a plurality of soot coatings could be deposited, the refractive index of each coating depending upon the desired refractive index profile of the resultant optical fiber. To form the refractive index profile between radii $r_1$ and $r_2$ of Fig. 7, soot coating 28 could consist of pure $SiO_2$. To form the profile between radii $r_1$ and $r_3$ of Fig. 8, a first soot coating of $GeO_2$-doped $SiO_2$ could be deposited on tube 27 followed by a second soot coating comprising pure $SiO_2$.

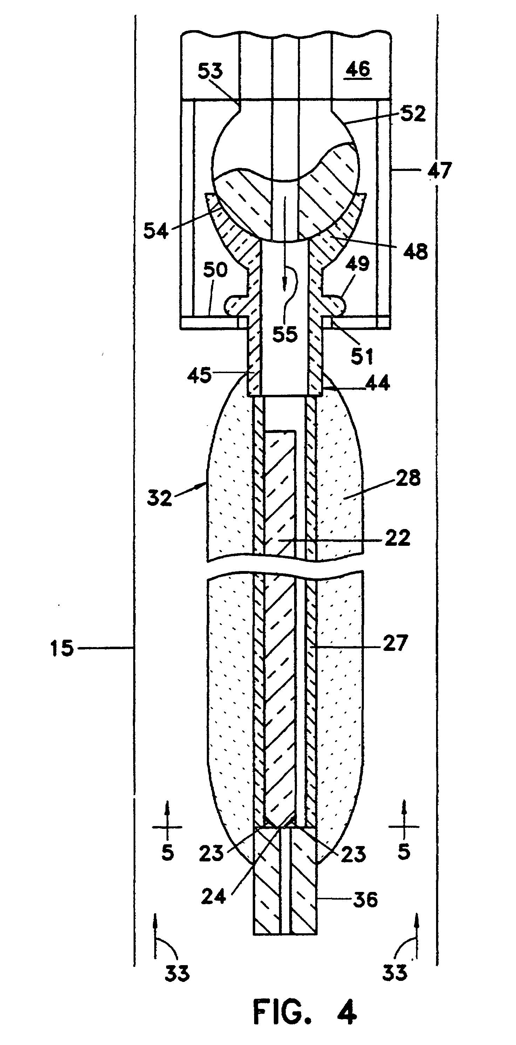

Referring to Fig. 4, the soot-coated tube is removed from the lathe, and a solid glass core rod 22 is inserted through handle 44 and into tube 27 to form assembly 32. Rod 22 cannot fall beyond tube 36 since that tube has a relatively small bore. If tube 36 were not employed, tube 27 could be heated and tapered inwardly to form a region of small enough inner diameter to retain rod 22. Alternatively, a small deformation could be made to the top end of rod 22 to cause it to be retained by the top of tube 27. Rod 22 is preferably formed of a glass having a refractive index greater than that of tube 27, e. g. pure silica or silica doped with $GeO_2$, $P_2O_5$ or the like. Rod 22 can be formed by any one of various known techniques such as modified chemical vapor deposition (MCVD), vapor axial deposition (VAD) and outside vapor deposition (OVD), depending upon its desired refractive index profile. Two of the profiles that can be produced by the OVD technique are the central regions within radius $r_1$ of Figs. 7 and 8. The central region of Fig. 7 is a radially decreasing one while that of Fig. 8 is a substantially step-profile. To make optical fibers having various types of optical characteristics, such as a specific dispersion modified characteristic, the central portion of the fiber may have a different refractive index profile such as parabolic gradient or the like. Any additional layers of radius greater than that of the fluorine-doped tube also affect optical properties such as dispersion.

Handle 44 is suspended from a support tube 46 for insertion into consolidation furnace 15. Handle 44 comprises glass tube 45 having a flared joint 48 at its upper end and an annular enlargement 49 spaced from the joint 48. Support tube 46 has a slotted handle formed in the end thereof. One side of end region 47 of tube 46 is removed to accept the upper end of handle 44, enlargement 49 resting on slotted base 50 as the adjacent section of tube 45 is inserted into slot 51. At the end of gas conducting tube 53 is a ball joint 52 which fits into cavity 54 of joint 48.

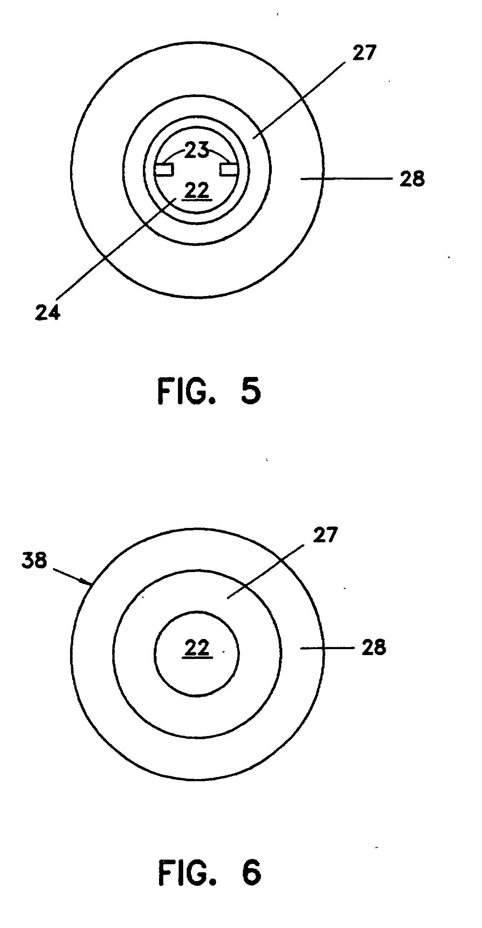

While assembly 32 is heated in consolidation furnace 15, a drying gas flows upwardly through the furnace (arrows 33). The drying gas conventionally comprises a mixture of chlorine and an inert gas such as helium. A chlorine-containing gas stream (arrow 55) is flowed from tube 53 into tube 27. Although gas stream 55 could contain a diluent such as helium, pure chlorine is preferred for cleaning purposes. Since the diameter of rod 22 is slightly smaller than the inner diameter of tube 27, the chlorine flows downwardly around the entire periphery of rod 22; it exhausts through tube 36. To facilitate the flow of chlorine past the bottom end of rod 22, that end can be provided with one or more slots 23 at the periphery of the bottom surface (Figs. 4 and 5). The chlorine acts a hot chemical cleaning agent. During this hot chlorine cleaning step, the temperature is below the consolidation temperature of soot coating 28 so that the space between rod 22 and tube 27 remains open for a sufficient length of time for the required cleaning to occur. The chlorine cleaning step is more effective at high temperatures. It is preferred that the temperature of the cleaning step be at least 1000°C, since at lower temperatures, the duration of the step would be sufficiently long that the step would be undesirable for commercial purposes. Obviously, lower temperatures could be employed if processing time were not a concern. The flow of hot chlorine between the fluorine tube and rod 22 is very beneficial in that it allows the surfaces of the two members to be brought together without the formation of seeds at their interface. Seeds include defects such as bubbles and impurities that can produce attenuation in the resultant optical fiber.

As soot coating 28 consolidates, it exerts a force radially inwardly on tube 27, thereby forcing that tube inwardly against rod 22 to form a fused assembly 38 (see Fig. 6) in which the three regions 22, 27 and 28' are completely fused. A relatively low density soot provides a greater inwardly directed force; however, the soot coating must be sufficiently dense to prevent cracking.

Cladding glass layer 28' functions as part of the cladding in the resultant optical fiber. Fused assembly 38 is provided with additional cladding prior to drawing assembly 38 into fiber. For example, a coating of cladding soot can be deposited onto assembly 38 and then consolidated. Alternatively, assembly 38 can be inserted into a cladding glass tube.

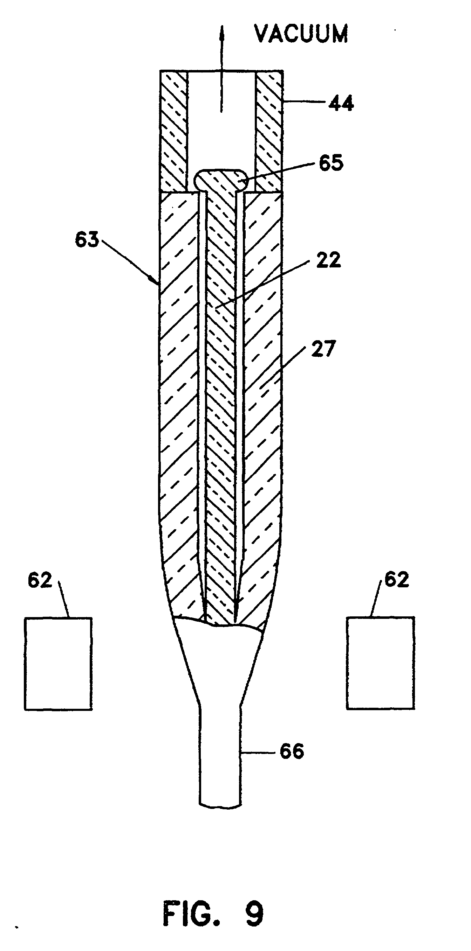

In accordance with another aspect of the invention soot coating 28 is not deposited on tube 27, and tube 27 is not collapsed onto rod 22 in furnace 15. The assembly including rod 22, tube 27, tube 36 and ball joint handle 44 is subjected to an elevated temperature in a furnace while chlorine flows between rod 22 and tube 27 as discussed above. The temperature preferably remains within the range of about 1000°C to 1500°C to chemically clean the surfaces of members 22 and 27. After a sufficient period of time has elapsed to permit chemical cleaning to occur, the cleaned assembly 63 is removed from that furnace and is inserted into a conventional draw furnace (Fig. 9). The top end of rod 22 is provided with an enlarged end 65 which is suspended from a narrow region at or near handle 44. In the illustrated embodiment, the inside diameter of the bottom end of handle 44 is larger than the inside diameter of the top end of tube 27; this provides a ledge for supporting enlargement 65. A source of vacuum (not shown) is connected to handle 44. The bottom tip of assembly 63 is heated by resistance heater 62. As the tip of assembly 63 passes through heater 62, the diameter of the assembly decreases, and tube 27 collapses onto rod 22 and the space between those two members becomes evacuated. Further drawing of assembly 63 causes the assembly to elongate into a core preform rod 66 in which tube 27 is fused to rod 22. The core preform rod is severed into suitable lengths which are provided with cladding and drawn into optical fiber as described above.

Typical step-index optical fibers that were designed for use at wavelengths around 1300 nm exhibit a positive dispersion in the 1550 nm window where the fiber exhibits lowest attenuation. Such a system can be upgraded for operation in the 1550 nm window by placing in series with the step-index fiber a dispersion compensating (DC) fiber having a relatively high value of negative dispersion at 1550 nm. The following example describes the manufacture of such a DC fiber.

A single-mode DC optical fiber having the refractive index profile illustrated in Fig. 7 was made as follows. A 0.25 inch (0.64 mm) alumina rod was inserted through the center an alumina tube having a 1.5 inch (3.8 cm) outside diameter. Rubber corks were used at the ends of the alumina tube to center the alumina rod within it. Handle 11 was placed near one end of the alumina tube. Pure silica soot was deposited on the alumina tube and on a portion of the handle. A detailed description of a method of forming a porous preform on an alumina tube can be found in U.S. patent 5,180,410.

A standard ball joint handle 14 was fused to the silica handle 11 prior to consolidation. Consolidation was carried out in the manner described in conjunction with Fig. 2. The centerflow gas 16 consisted of 1.5 slpm $SiF_4$. Muffle gas 17 consisted of 20 slpm He, 0.5 slpm $Cl_2$ and 1.0 slpm $SiF_4$.

The consolidated fluorine-doped tube contained about 2.4 wt. % fluorine (the $\Delta$-value of the tube with respect to silica was about -0.7%$\Delta$). The tube was redrawn to form an elongated tube having an outside diameter of approximately 12 mm and an inside diameter of 6.1 mm. A 30 inch (76 cm) long piece of fluorine-doped tubing 27 was severed from the consolidated tube. A standard ground joint handle 44 was fused to a first end of tube 27. A 4 inch (10 cm) long silica tube 36 having inside and outside diameters of about 3mm and 12 mm was fused to the second end of tube 27. The ends of the resultant tubular structure were mounted in a lathe where it was rotated and translated with respect to flame hydrolysis burner 13 (Fig. 3). Particles of $SiO_2$ soot entrained in the burner flame were deposited on tube 27 to build up a coating 28 having a length of 70 cm and a outside diameter of 90 mm. Coating 28 extended over the entire length of tube 27, and it extended a longitudinal distance of about 50 mm along handle 44. The coated structure 30 was then removed from the lathe.

The following method was used to make core rod 22. The large diameter end of an alumina mandrel was inserted into a glass tubular handle. The outside diameter of the mandrel tapered from 5.5 mm to 6.5 mm over its 107 cm length. The ends of the mandrel were mounted in a lathe where it was rotated and translated. $GeO_2$-doped $SiO_2$ soot was deposited on the mandrel and a portion of the handle. The reactants $GeCl_4$ and $SiCl_4$ were initially flowed to the burner in sufficient quantities to form soot formed of $SiO_2$ doped with 37 wt. % $GeO_2$. With each pass of the burner with respect to the mandrel, the flow of $GeCl_4$ was decreased, the last pass depositing pure silica soot. The flow of $GeCl_4$ to the burner decreased in accordance with such a recipe that the radial decrease in the concentration of $GeO_2$ in the resultant fiber was substantially parabolic.

After the deposition of a soot preform to a thickness of 100 mm, the mandrel was removed by pulling it out through the handle, thereby leaving a longitudinal aperture. A capillary tube was inserted into the end of the porous preform aperture opposite the handle. The porous preform was suspended in a consolidation furnace, and a centerline drying gas comprising 1.0 slpm helium and 50 sccm chlorine was flowed through the handle, into the preform aperture, and outwardly through the preform interstices. A muffle gas comprising 40 slpm helium flowed upwardly through the furnace. The maximum temperature of the consolidation furnace was 1460°C. The aperture of the capillary tube plug closed during the consolidation process.

The consolidated preform was inserted into a draw apparatus where its tip was heated to 2100°C while a vacuum connection was affixed to its upper end in the manner disclosed in U.S. patent 4,486,212, which is incorporated herein by reference. After the end of the preform was stretched so that its aperture was either very narrow or completely closed, the aperture was evacuated. As the lower end of the preform was pulled downwardly at a rate of about 15 cm/min, and its diameter decreased, the evacuated aperture collapsed. The diameter of the resultant rod was approximately 6 mm. The refractive index profile of the resultant stretched rod was similar to that between the axis and radius and $r_1$ of Fig. 7. A rod 22 having a length of 70 cm was severed from the stretched rod. Two slots 23 were sawed at the periphery of that end 24 of rod 22 that was to form the lower end in the subsequent consolidation process.

Rod 22 was inserted through handle 44 and into fluorine-doped tube 27 until end 24 thereof contacted tube 36, thereby forming the soot-coated assembly 32 of Fig. 4. Handle 44 of assembly 32 was suspended from a support tube 46 for insertion into the consolidation furnace. While assembly 32 was rotated at 1 rpm, it was lowered into consolidation furnace muffle 15 at a rate of 5 mm per minute. A gas mixture comprising 50 sccm chlorine and 40 slpm helium flowed upwardly through the muffle. The centerline gas flow 55 consisted of 0.5 slpm chlorine. The chlorine flowed downwardly around rod 22 and exhausted through tube 36. The maximum temperature in the consolidation furnace was 1500°C. As assembly 32 moved downwardly into the furnace, the temperature of assembly became high enough that the centerline chlorine flow cleaned the adjacent surfaces of rod 22 and tube 27. As assembly 32 moved further into the furnace, first its tip and then the remainder of the assembly was subjected to the 1460°C temperature which was sufficient to consolidate coating 28. During consolidation of soot coating 28, tube 27 was forced inwardly against section 22, and the contacting surfaces became fused, thereby forming fused assembly 38.

Assembly 38 was removed from the consolidation furnace and was inserted into a draw furnace. The lower end of the preform was heated to about 2100°C, and it was drawn to form a rod having a diameter of 5.5 mm.

A 90 cm section was severed from the resultant rod, and it was supported in a lathe where it functioned as a mandrel for the deposition of an additional coating of cladding glass soot. Deposition was continued in the manner described in conjunction with Fig. 1 until a layer of $SiO_2$ particles having an outside diameter of 100 mm was deposited to form a composite preform.

The resultant composite preform was gradually inserted into a consolidation furnace having a maximum temperature of 1450° where it was consolidated while a mixture of 99.5 volume percent helium and 0.5 volume percent chlorine flowed upwardly through the furnace muffle. The resultant consolidated draw blank, the diameter of which was about 50 mm, was inserted into a draw furnace where the tip thereof was subjected to a temperature of about 2100°C. The draw blank was drawn to form a dispersion compensating optical fiber having an outside diameter of 125 $\mu$m. The single-mode cutoff value of the fiber was 750 nm. At a wavelength of 1550 nm, the attenuation was 0.5 dB/km and dispersion was more negative than -90 psec/km nm. The lowest value of dispersion for fibers made by this method was -105 psec/km nm.

Prior to the present invention, seeds formed at the interface between the fluorine tube and germania rod when those two members were brought together. This process essentially completely eliminates seeds as evidenced by the fact that blanks yielding 50 km of fiber were consistently drawn with no upsets, i.e. fiber attenuation at 1550 nm was consistantly around 0.5 dB/km.

**Claims**

1. A method of making an optical fiber preform comprising the steps of

inserting a glass core rod (22) into a glass tube (27) to form an assembly, said tube having first and second ends,

heating the entire assembly,

flowing a chlorine-containing gas (55) into the first end of said tube and between said tube and said rod, and out of the second end of said tube, and

collapsing said tube onto said rod,

**characterized in that** the glass tube (27) is doped with an index of refraction decreasing doping agent, and **in that** the resultant assembly is provided with a layer of cladding glass (28').

2. The method of claim 1 wherein, prior to the step of heating the assembly, a coating of glass particles (28) is deposited onto the outer surface of said tube (27), and wherein the step of collapsing comprises heating the assembly comprising the coated tube and the rod (22) to consolidate said coating, thereby generating a radially-inwardly directed force that causes said tube to collapse onto and fuse to said rod.

3. Method according to claim 2, wherein said heating comprises heating the coated assembly to a temperature lower than the consolidation temperature of said glass particles (28), and thereafter heating to a temperature sufficient to consolidate said coating, thereby generating a radially-inwardly directed force that causes said tube (27) to collapse onto and fuse to said rod (22), thereby forming a consolidated assembly.

4. The method of claim 1, 2 or 3, wherein said glass tube (27) is formed by the steps of forming a tubular porous glass preform (12) having a longitudinal aperture (18) therethrough, flowing a fluorine-containing gas (16) into said aperture and outwardly through the pores of said porous preform, and heat treating the porous glass preform to consolidate it into a non-porous fluorine-doped tube.

5. The method of claim 1, 2 or 3, wherein said glass tube is formed by the steps of depositing boron-containing glass particles on a cylindrical mandrel, removing the mandrel to form a tubular, boron-containing porous glass preform, and heat treating the porous glass preform to consolidate it into a non-porous boron-doped tube.

6. The method of any preceding claim, wherein, during the step of collapsing said tube (27) onto said rod (22), said tube is evacuated.

7. The method of any preceding claim, wherein said chlorine-containing gas consists of pure chlorine, or said chlorine-containing gas comprises chlorine and a diluent gas.

8. The method of claim 1, wherein the chlorine-containing gas is continually supplied to the first end of said tube, and wherein the second end of said tube is subjected to a sufficiently high temperature that the second end of said tube collapses and prevents the further flow of said chlorine-containing gas, or a capillary tube is fused to the second end of said tube, said chlorine-containing gas being continually supplied to the first end of said tube, and wherein said capillary tube is subjected to a sufficiently high temperature that said capillary tube collapses and prevents the further flow of said chlorine-containing gas.

9. The method of any preceding claim, wherein said assembly is supported vertically during the steps of heating and flowing, whereby said chlorine-containing gas flows around the entire periphery of said core rod during the step of flowing.

10. The method of claim 1, wherein, during the step of collapsing said tube onto said rod, the step of flowing a chlorine-containing gas continues until it is discontinued by the collapsing of a softened glass member.

11. The method of claim 10, wherein an extension tube (36) is fused to the second end of said tube, and during the step of collapsing said tube onto said rod, the step of flowing a chlorine-containing gas continues until it is discontinued by the collapsing of said extension tube.

12. The method of claim 1, wherein the step of inserting comprises inserting a germania-doped silica rod (22) into a fluorine-doped silica tube (27).

13. The method of any preceding claim, wherein the glass tube (27) comprises core glass.

14. The method of any preceding claim, wherein the doping agent is a fluorine-containing compound.

**Patentansprüche**

1. Verfahren zum Herstellen einer optischen Faservorform, welche die Schritte aufweist,

Einfügen eines Glaskernstabes (22) in ein Glasrohr (27), um eine Baugruppe zu bilden, wobei das Rohr ein erstes und

zweites Ende aufweist,

Erwärmen der gesamten Baugruppe,

Einströmen eines chlorhaltigen Gases (55) am ersten Ende des Rohres und zwischen dem Rohr und dem Stab und Ausstromen an dem zweiten Ende des Rohres, und

Kollabieren des Rohres auf den Stab,

**dadurch gekennzeichnet, dass** das Glasrohr (27) mit einem Dotiermittel mit abnehmendem Brechungsindex dotiert wird und dass die sich ergebende Baugruppe mit einer Schicht aus Mantelglas (28') ausgestattet wird.

**2.** Verfahren nach Anspruch 1, wobei vor dem Schritt des Erwärmens der Baugruppe eine Beschichtung mit Glaspartikeln (28) auf der äußeren Oberfläche des Rohres (27) abgelagert wird und wobei der Schritt des Kollabierens umfasst, das Erwärmen der Baugruppe, welche das beschichtete Rohr und den Stab (22) aufweist, um die Beschichtung zu schmelzen, wodurch eine radial nach innen gerichtete Kraft erzeugt wird, welche dazu führt, dass das Rohr auf den Stab kollabiert und mit ihm zusammenschmilzt.

**3.** Verfahren nach Anspruch 2, wobei das Erwärmen umfasst, Erwärmen der beschichteten Baugruppe auf eine Temperatur niedriger als die Schmelztemperatur der Glaspartikel (28), und danach Erwärmen auf eine Temperatur, welche ausreicht, um die Beschichtung zu schmelzen, wodurch eine radial nach innen gerichtete Kraft erzeugt wird, welche dazu führt, dass das Rohr (27) auf den Stab (22) kollabiert und mit ihm verschmilzt, wodurch eine verschmolzene Baugruppe gebildet wird.

**4.** Verfahren nach Anspruch 1, 2 oder 3, wobei das Glasrohr (27) durch die Schritte gebildet wird, Bilden einer rohrförmigen porösen Glasvorform (12), welche eine longitudinale Öffnung (18) durch sie hindurch aufweist, Einströmen eines fluorhaltigen Gases (16) in diese Öffnung und Ausströmen durch die Poren der porösen Vorform und Wärmebehandlung der porösen Glasvorform, um sie in ein nicht-poröses, Fluor-dotiertes Rohr zu schmelzen.

**5.** Verfahren nach Anspruch 1, 2 oder 3, wobei das Glasrohr durch die Schritte gebildet wird, Ablagern von borhaltigen Glaspartikeln auf einem zylindrischen Dorn bzw. Ziehkopf, Entfernen des Dornes, um eine rohrförmige, borhaltige poröse Glasvorform zu erhalten, und Wärmebehandeln der porösen Glasvorform, um sie in ein nicht-poröses Bor-dotiertes Rohr zu schmelzen.

**6.** Verfahren nach einem der vorangehenden Ansprüche, wobei während des Schrittes des Kollabierens des Rohres (27) auf den Stab (22) das Rohr evakuiert wird.

**7.** Verfahren nach einem der vorangehenden Ansprüche, wobei das chlorhaltige Gas aus reinem Chlor besteht oder das chlorhaltige Gas Chlor und ein Verdünnungsgas beinhaltet.

**8.** Verfahren nach Anspruch 1, wobei das chlorhaltige Gas kontinuierlich dem ersten Ende des Rohres zugeführt wird und wobei das zweite Ende des Rohres einer ausreichend hohen Temperatur ausgesetzt wird, so dass das zweite Ende des Rohres kollabiert und das weitere Strömen des chlorhaltigen Gases verhindert, oder ein Kapillarrohr an das zweite Ende des Rohres angeschmolzen wird, wobei das chlorhaltige Gas kontinuierlich dem ersten Ende dea Rohres zugeführt wird und wobei das Kapillarrohr einer ausreichend hohen Temperatur ausgesetzt wird, so dass das Kapillarrohr kollabiert und das weitere Fließen des chlorhaltigen Gases verhindert.

**9.** Verfahren nach einem der vorangehenden Ansprüche, wobei die Baugruppe während der Schritte des Erwärmens und Strömens vertikal gestützt wird, wodurch das chlorhaltige Gas um die gesamte Peripherie des Kernstabes während des Stromschrittes strömt.

**10.** Verfahren nach Anspruch 1, wobei während des Kollabierschrittes des Rohres auf den Stab der Schritt des Strömens eines chlorhaltigen Gases weiter anhält, bis er durch das Kollabieren eines erweichten Glasgliedes bzw. -stabes unterbrochen wird.

**11.** Verfahren nach Anspruch 10, wobei ein Verlängerungsrohr (36) an das zweite Ende des Rohres geschmolzen wird und während des Schrittes des Kollabierens des Rohres auf den Stab der Schritt des Strömens eines chlorhaltigen Gases weiter anhalt, bis er durch das Kollabieren des Verlängerungsrohres unterbrochen wird.

**12.** Verfahren nach Anspruch 1, wobei der Schritt des Einfügens das Einfügen eines Germanium-dotierten Siliziumstabes (22) in ein Fluor-dotiertes Siliziumrohr (27) beinhaltet.

**13.** Verfahren nach einem der vorangehenden Ansprüche, wobei das Glasrohr (27) Kernglas aufweist.

**14.** Verfahren nach einem der vorangehenden Ansprüche, wobei das Dotiermittel eine fluorhaltige Verbindung ist.

## Revendications

**1.** Un procédé de réalisation d'une préforme de fibre optique comprenant les opérations consistant :

à introduire une tige de verre de coeur (22) dans un tube de verre (27) pour former un ensemble, ledit tube présentant une première et une deuxième extrémités,
à chauffer tout l'ensemble,
à envoyer un gaz contenant du chlore (55) dans la première extrémité dudit tube et entre ledit tube et ladite tige et à le faire sortir par la deuxième extrémité dudit tube, et

à rétracter ledit tube contre ladite tige,

**caractérisé en ce que** le tube de verre (27) est dopé par un agent dopant abaisseur d'indice de réfraction, et **en ce que** l'ensemble résultant est pourvu d'une couche de verre de gainage (28').

2. Le procédé de la revendication 1 dans lequel, antérieurement à l'opération de chauffage de l'ensemble, on dépose un revêtement de particules de verre (28) sur la surface extérieure dudit tube (27), et dans lequel l'opération de rétraction comprend un chauffage de l'ensemble comprenant le tube revêtu et la tige (22) pour consolider ledit revêtement, lequel chauffage donnant naissance à une force dirigée radialement vers l'intérieur qui provoque la rétraction dudit tube contre ladite tige et son soudage à celle-ci.

3. Le procédé de la revendication 2, dans lequel ledit chauffage comprend un chauffage de l'ensemble revêtu à une température inférieure à la température de consolidation desdites particules de verre (28), puis un chauffage à une température suffisante pour consolider ledit revêtement, en donnant ainsi naissance à une force dirigée radialement vers l'intérieur qui provoque la rétraction dudit tube (27) contre ladite tige (22) et son soudage à celle-ci, en formant ainsi un ensemble consolidé.

4. Le procédé de la revendication 1, 2 ou 3, dans lequel le tube de verre (27) est formé par les opérations consistant à former une préforme tubulaire en verre poreux (12) présentant une ouverture longitudinale (18) la traversant, à envoyer un gaz contenant du fluor (16) dans ladite ouverture et à le faire sortir par les pores de ladite préforme poreuse, et à traiter thermiquement la préforme en verre poreux pour la consolider en la transformant en un tube non poreux dopé au fluor.

5. Le procédé de la revendication 1, 2 ou 3, dans lequel ledit tube de verre est formé par les opérations consistant à déposer des particules de verre contenant du bore sur un mandrin cylindrique, à ôter le mandrin pour former une préforme tubulaire en verre poreux contenant du bore, et à traiter thermiquement la préforme en verre poreux pour la consolider en la transformant en un tube non poreux dopé au bore.

6. Le procédé de l'une quelconque des revendications précédentes, dans lequel, pendant l'opération de rétraction dudit tube (27) contre ladite tige (22), on fait le vide dans ledit tube.

7. Le procédé de l'une quelconque des revendications précédentes, dans lequel ledit gaz contenant du chlore est constitué de chlore pur, ou ledit gaz contenant du chlore comprend du chlore et un gaz diluant.

8. Le procédé de la revendication 1, dans lequel le gaz contenant du chlore est délivré en continu à la première extrémité dudit tube, et dans lequel la deuxième extrémité dudit tube est soumise à une température suffisamment élevée pour que la deuxième extrémité dudit tube se rétracte et empêche l'écoulement dudit gaz contenant du chlore de se poursuivre, ou un tube capillaire est soudé à la deuxième extrémité dudit tube, ledit gaz contenant du chlore étant délivré en continu à la première extrémité dudit tube, et dans lequel ledit tube capillaire est soumis à une température suffisamment élevée pour que ledit tube capillaire se rétracte et empêche l'écoulement dudit gaz contenant du chlore de se poursuivre.

9. Le procédé de l'une quelconque des revendications précédentes dans lequel ledit ensemble est supporté verticalement pendant les opérations de chauffage et d'envoi de gaz, de sorte que ledit gaz contenant du chlore circule autour de toute la périphérie de ladite tige de coeur au cours de l'opération d'envoi.

10. Le procédé de la revendication 1, dans lequel, pendant l'opération de rétraction dudit tube contre ladite tige, l'opération d'envoi d'un gaz contenant du chlore se poursuit jusqu'à ce qu'elle soit interrompue par la rétraction d'un élément en verre ramolli.

11. Le procédé de la revendication 10, dans lequel on soude un tube prolongateur (36) à la deuxième extrémité dudit tube et, pendant l'opération de rétraction dudit tube contre ladite tige, l'opération d'envoi d'un gaz contenant du chlore se poursuit jusqu'à ce qu'elle soit interrompue par la rétraction dudit tube prolongateur.

12. Le procédé de la revendication 1, dans lequel l'opération d'introduction comprend l'introduction d'une tige (22) en silice dopée à l'oxyde de germanium dans un tube (27) en silice dopée au fluor.

13. Le procédé de l'une quelconque des revendications précédentes, dans lequel le tube en verre (27) comprend du verre du coeur.

14. Le procédé de l'une quelconque des revendications précédentes, dans lequel l'agent dopant est un composé contenant du fluor.

FIG. 1

FIG. 2

FIG. 3

FIG. 4

FIG. 5

FIG. 6

FIG. 7

FIG. 8

15

FIG. 9